# EUROPÄISCHE PATENTSCHRIFT

(11) **EP 1 212 504 B1**
(45) Veröffentlichungstag und Bekanntmachung des Hinweises auf die Patenterteilung: **10.11.2004**
(21) Anmeldenummer: 00964084.8
(22) Anmeldetag: 01.09.2000
(51) Int. Cl.: E05D 5/14, E05D 5/12, E05D 9/00, F16C 33/08, B21D 53/40

(54) **GLEITLAGERUNG UND VERFAHREN ZU SEINER HERSTELLUNG**
SLIDE BEARING AND METHOD FOR THE PRODUCTION THEREOF
PALIER A GLISSEMENT ET PROCEDE DE FABRICATION

(30) Priorität: 17.09.1999 DE 19944674
(43) Veröffentlichungstag der Anmeldung: 12.06.2002
(73) Patentinhaber: KS Gleitlager GmbH, 68789 St. Leon-Rot (DE)
(72) Erfinder: STORCH, Thomas, 68782 Brühl (DE); WAGNER, Heinrich, 69231 Rauenberg (DE)
(74) Vertreter: Dreiss, Fuhlendorf, Steimle & Becker
(86) Internationale Anmeldenummer: PCT/EP2000/008542
(87) Internationale Veröffentlichungsnummer: WO 2001/021916

(56) Entgegenhaltungen:
- DE-A- 3 922 052
- DE-U- 8 434 089

## Beschreibung

Die Erfindung betrifft eine Gleitlagerung umfassend ein eine Lageröffnung aufweisendes Scharniergehäuseteil und eine in die Lageröffnung eingepresste Bundlagerbuchse, in die ein Lagerbolzen einsteckbar und darin schwenkbar lagerbar ist, wobei die Bundlagerbuchse eine in Umfangsrichtung verlaufende nach radial innen vorstehende sickenförmige Erhebung aufweist.

Der Begriff Scharniergehäuseteil ist im weitesten Sinne zu verstehen. Es kann sich hierbei um einen Scharnier- oder Gelenkarm handeln, der mit einem weiteren Gelenk- oder Scharnierarm zusammenwirkt und an dem ein zu verschwenkendes Teil, etwa eine Kraftfahrzeugtür befestigbar ist. Als Scharniergehäuseteil kann aber auch eine orts- oder maschinenfeste Wange dienen, die eine Lageröffnung zum Einstecken eines Lagerbolzens aufweist. Der Lagerbolzen selbst kann insbesondere drehfest mit einem weiteren Scharniergehäuseteil oder einem gegenüber dem ersteren zu verschwenkenden Gegenstand verbunden sein oder verbunden werden.

Eine derartige Gleitlagerung ist aus DE 84 34 089 U1 bekannt. Bei dieser Gleitlagerung ist ein Scharnierbolzen erklärtermaßen an von außen unzugänglicher Stelle durch ein einrastbares Stirnende einer Bundlagerbuchse gegen axiales Herausfallen gesichert. Das einrastbare Stirnende der Bundlagerbuchse würde der sickenförmigen Erhebung entsprechen. Ein nachträgliches Lösen des Lagerbolzens ist nicht möglich.

Mit der DE 39 22 052 A1 wurde bereits vorgeschlagen, eine wartungsfreie Gleitlagerung für ein Kraftfahrzeugtürscharnier so auszubilden, dass die Bundlagerbuchse eine wellenförmige Profilierung aufweist, die in die Gleitoberfläche eingeprägt ist. Hierdurch soll der Lagerbolzen möglichst spielfrei in der Bundlagerbuchse aufgenommen werden können. Die Herstellung dieser Gleitlagerung ist aufwendig und beim Einstecken des Lagerbolzens wird das Wellenprofil plastisch, insbesondere unter Scherbeanspruchung verformt. Die Gleitoberfläche wird zerstört und die Lebensdauer der Gleitlagerung ist nicht zufriedenstellend. Dieses Konzept konnte sich nicht durchsetzen.

Der vorliegenden Erfindung liegt die Aufgabe zugrunde, eine Gleitlagerung der eingangs beschriebenen Art dahingehend zu verbessern, dass der Lagerbolzen vor der Montage der scharnierbildenden Teile in die bereits eingepresste Bundlagerbuchse einsteckbar und darin unverlierbar gehalten ist, so dass quasi eine Scharnierhälfte mit samt dem Lagerbolzen gehandhabt werden kann.

Diese Aufgabe wird durch eine Gleitlagerung der genannten Art gelöst, die dadurch gekennzeichnet ist, dass die sickenförmige Erhebung von einem im Buchsenlängsschnitt betrachtet bogenförmig verlaufenden Bereich der Wandung der Bundlagerbuchse im Bereich eines axialen Endes der Lageröffnung ausgebildet ist und der bogenförmige Bereich in den dortigen Bund der Buchse ausläuft, derart, dass zwischen der Lageröffnung und der dieser zugewandten Außenseite der Bundlagerbuchse im Bereich des bogenförmigen Verlaufs vor dem Einstecken des Lagerbolzens ein Abstand (h) gebildet ist und der bogenförmige Bereich der Bundlagerbuchse nach radial außen verformbar ist.

Dadurch, dass die in die Lageröffnung eingepresste Bundlagerbuchse die nach radial innen vorstehende sickenförmige Erhebung aufweist, die vorzugsweise federnd nach radial außen verformbar ist, kann bei Einstecken des Lagerbolzens einerseits eine spielfreie Gleitlagerung bzw. Aufnahme des Lagerbolzens in der Bundlagerbuchse erreicht werden, und andererseits wird der Lagerbolzen, wenn er in die Bundlagerbuchse eingesteckt ist, klemmend in der Bundlagerbuchse gehalten. Das Scharniergehäuseteil kann also quasi in vormontiertem Zustand gelagert, transportiert und der Endmontage zugeführt werden. Hierdurch kann die Montage vor Ort erheblich rationeller gestaltet werden. Die Einsparungen sind beträchtlich. Es wird darauf hingewiesen, dass die Ausgestaltung der sickenförmigen Erhebung in Form des bogenförmigen Verlaufs der Bundlagerbuchse derart gewählt sind, dass sich der erwähnte Abstand zwischen der Lageröffnung des Scharniergehäuseteils und der äußeren Wandung der Bundlagerbuchse in dem bogenförmigen Bereich nach Einstecken des Lagerbolzens vorzugsweise schließt, dass also die Bundlagerbuchse mit ihrer dann wieder zylindrischen Außenfläche gegen die Lageröffnung anliegt.

In Weiterbildung des Erfindungsgedankens ist die sickenförmige Erhebung im Bereich eines axialen Endes der Lageröffnung ausgebildet. Es handelt sich vorzugsweise um die einzige sickenförmige Erhebung der Bundbuchse. Der Lagerbolzen wird dann beim Einführen von der gegenüberliegenden Seite her über eine beträchtliche axiale Länge geführt und kann dann gegen den bogenförmigen Verlauf angleiten und diesen radial nach außen drücken.

Die vorstehende Weiterbildung erweist sich insbesondere dann als besonders vorteilhaft, wenn die Bundlagerbuchse eine Doppelbundbuchse ist und die im Bereich eines axialen Endes der Doppelbundbuchse vorgesehene sickenförmige Erhebung in den dortigen Bund ausläuft. Insofern erweist es sich als vorteilhaft, wenn ein Bund der Bundlagerbuchse gleitend gegen einen die Lageröffnung umgebenden Oberflächenbereich des Scharniergehäuseteils oder eines zwischengeordneten Teils angeordnet ist, so dass der Bund beim Einsetzen eines Lagerbolzens in die Bundlagerbuchse und damit einhergehender radialer Weitung der sickenförmigen Erhebung nach radial außen gleitet.

Wie bereits eingangs erwähnt, erweist es sich als vorteilhaft, wenn die Gleitlagerung ein vormontiertes Scharniergehäuseteil umfasst, in dessen Lageröffnung eine Bundlagerbuchse eingepresst ist mit darin unverlierbar der Lagerbolzen gehalten ist. Der Begriff "unverlierbar" ist nicht dahingehend zu verstehen, dass der Lagerbolzen nicht wieder entgegen seiner Einsteckrichtung aus der Bundlagerbuchse herausgedrückt werden könnte. Er ist vielmehr durch die radiale Verformung des bogenförmigen Bereichs der Bundlagerbuchse klemmend oder hemmend in der Lageröffnung gehalten, so dass er bei der üblichen Handhabung des Scharniergehäuseteils nicht unbeabsichtigt und ungewollt aus der Buchse herausfällt.

Die Erfindung betrifft auch ein Verfahren zum Herstellen einer Gleitlagerung der erfindungsgemäßen Art. Dieses erfindungsgemäße Verfahren umfasst die Merkmale des Anspruchs 7. Die von einer Seite in die Lageröffnung eingesteckte Bundlagerbuchse, wird demnach von der gegenüberliegenden Seite in Längsrichtung gedrückt, geschoben oder gestaucht. Hierbei wird die bogenförmige Ausformung, welche die sickenförmige Erhebung bildet, erzeugt.

Hierfür erweist es sich als vorteilhaft, dass während dieses axialen Schiebens, Pressens oder Stauchens ein Dorn nicht nur ein Stück weit in die Bundlagerbuchse eingesteckt ist, sondern durch die Bundlagerbuchse hindurchgeführt ist. Der Dorn weist vorzugsweise eine abgesetzte Außenfläche auf. Im Übergangsbereich vom radial weiteren zum radial engeren Bereich der Außenfläche des Dorns wird dann der bogenförmige Verlauf der Buchsenwand erzeugt. Wenn dieser Dorn durch die Öffnung hindurchgeführt ist so lässt er sich auf der gegenüberliegenden Seite, etwa in einer Öffnung des Gesenkteils, mittels dessen der Bund gegen die Oberfläche des Scharniergehäuseteils gedrückt wird, führen.

Vorteilhafterweise wird über den Dorn bzw. durch die Einführbewegung des Dorn zugleich die axiale Stauchung des zylindrischen Teils der Bundlagerbuchse durchgeführt. In weiterer bevorzugter Ausbildung des Verfahrens wird beim axialen Stauchen des zylindrischen Teils der Bundlagerbuchse ein zweiter Bund gebildet.

Es erweist sich desweiteren als vorteilhaft, wenn der hierfür verwandte Dorn mit einer zur herzustellenden Bundebene parallel verlaufenden Pressfläche versehen ist und der zylindrische Bereich der Außenfläche des Dorns verrundet in diese Pressfläche übergeht, so dass das Stirnende des zylindrischen Teils der Bundbuchse über diese Verrundung bis zu einem radial äußeren Anschlag geleitet wird und hierdurch die Stauchung des zylindrischen Teils der Bundbuchse herbeigeführt wird.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Gleitlagerung und ihrer Herstellung.

In der Zeichnung zeigen:

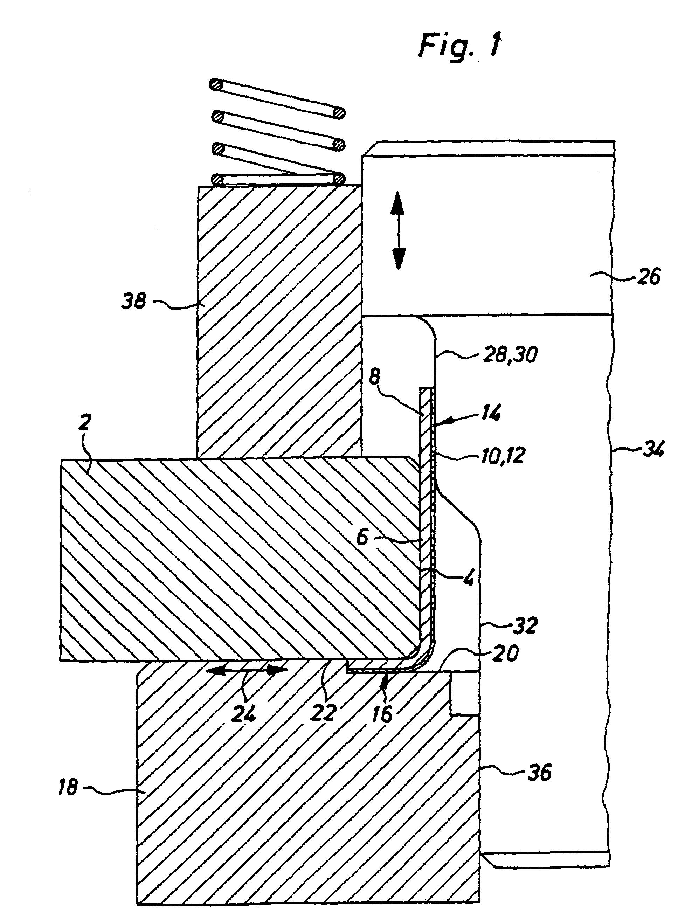

- Figuren 1 bis 4: verschiedene Phasen bei der Herstellung einer erfindungsgemäßen Gleitlagerung.

Figur 1 zeigt eine hälftige Darstellung einer erfindungsgemäßen Gleitlagerung. Die Gleitlagerung umfasst ein Scharniergehäuseteil 2 mit einer Lageröffnung 4 und einer darin eingepressten Bundlagerbuchse 6. Die Lagerbuchse 6 ist aus einem Stahl-/Kunststoff-Verbundwerkstoff hergestellt. Auf einen Stahlrücken 8 ist eine poröse Bronzeschicht aufgesintert und in die Poren der Bronzeschicht 10 ist eine Kunststoffgleitlagermischung 12 auf PTFE-Basis eingebracht. Die Bundlagerbuchse umfasst einen zylindrischen Teil 14 und einen ersten Bund 16. Die Bundlagerbuchse 6 ist in die Lageröffnung 4 eingepresst. Ihr Bund wird durch ein Pressengesenk 18 mit einer dem Bund entsprechenden Presslagerfläche 20 gegen eine die Lageröffnung 4 begrenzende Oberfläche 22 des Scharniergehäuseteils 2 gehalten. Hierdurch ist der Bund 16 auch in Richtung des Doppelpfeils 24, also in Ebenenrichtung der Oberfläche 22 festgelegt. In die Öffnung der Bundlagerbuchse 6 wird ein Dorn 26 eingeführt. Der Dorn 26 umfasst eine abgesetzte zylindrische Oberfläche 28 mit einem durchmesserweiteren Bereich 30 und einem durchmesserengerem Bereich 32. Das Pressengesenk 18 umfasst eine mit der Längsrichtung 34 der Gleitlagerung fluchtende Öffnung 36, in welche der durchmesserengere Bereich 32 des Dorns 26 hindurchgreift und darin verschieblich gelagert ist. Der Dorn 26 ist auf der anderen Seite durch ein Pressenoberteil 38 ebenfalls in Längsrichtung 34 verschieblich gelagert. Indem in Figur 1 dargestellten Schritt gleitet der Dorn 26 mit seinem durchmesserweiteren Bereich 30 gegen die Gleitfläche der Bundlagerbuchse 6.

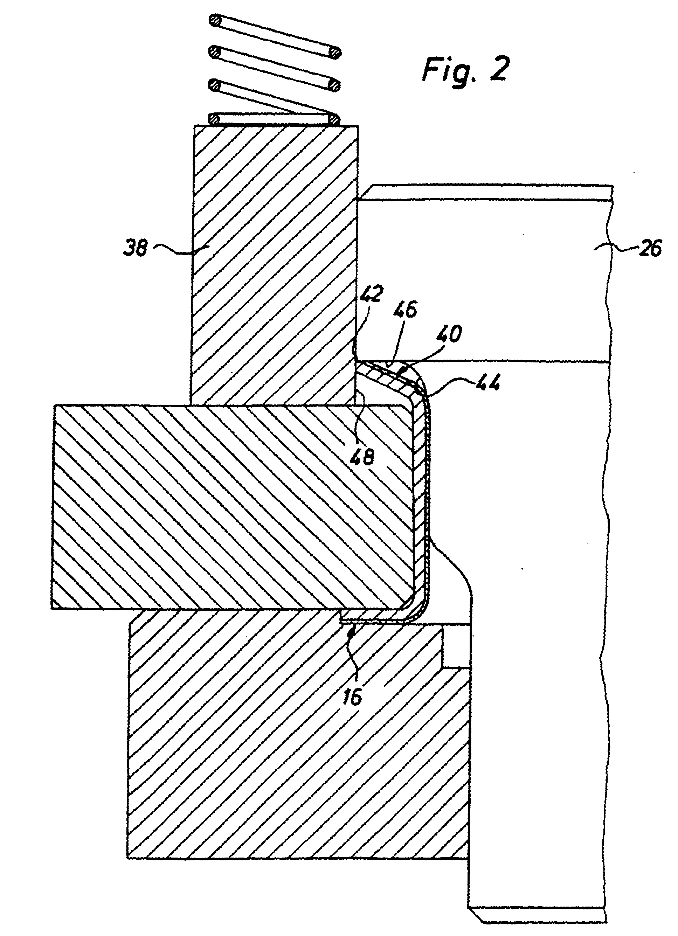

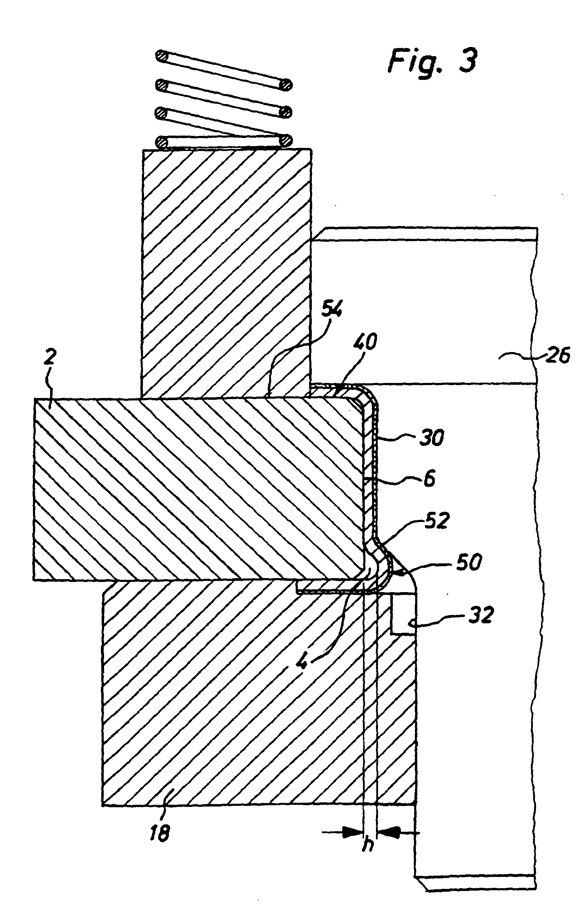

Wie sich der Figur 2 entnehmen läßt, die einen nachfolgenden Verfahrensschritt darstellt, wird auf der dem Bund 16 gegenüberliegenden Seite ein weiterer Bund 40 geformt, und zwar derart, dass das vom Bund 16 abgewandte Stirnende 42 des zylindrischen Teils 14 der Bundlagerbuchse 6 gegen einen verrundeten Übergang 44 zwischen dem durchmesserweiteren Bereich 30 der Außenfläche 28 des Dorns 26 und einer parallel zur Bundebene verlaufenden Pressfläche 46 des Dorns 26 aufgleitet und dabei nach radial außen umgelenkt wird. Schließlich stößt das Stirnende 42 gegen eine radial äußere Begrenzung 48 des Pressenoberteils 38. Bei weiterem Einführen des Dorns 26 wird nun die Wandung der Bundlagerbuchse in Längsrichtung, gestaucht, gedrückt und geschoben, und es bildet sich die aus Figur 3 ersichtliche sickenförmige Erhebung 50 nach radial innen. Diese sickenförmige Erhebung 50 wird von einem bogenförmigen Verlauf 52 der Wandung der Bundlagerbuchse 6 gebildet, welche im Übergang des durchmesserweiteren Bereichs 30 zum durchmesserengeren Bereich 32 des Dorns 26 herausgeformt wird. Diese Situation ist in Figur 3 dargestellt. Der bogenförmige Verlauf 52 bildet einen Abstand h von 0,01 - 1 mm, vorzugsweise 0,02 - 0,1 mm, zwischen der Lageröffnung 4 und der Außenseite der Wandung der Bundlagerbuchse 6 aus. Figur 3 zeigt auch die Endposition des Dorns 26 bezüglich des Pressengesenks 18 und des Scharniergehäuseteils 2. Der zweite Bund 40 der Bundlagerbuchse 6 ist ausgebildet und liegt gegen die der Oberfläche 22 gegenüberliegende Oberfläche 54 des Scharniergehäuseteils 2 an. Der Dorn wird nun aus der Bundlagerbuchse 6 herausgezogen; die Bundlagerbuchse 6 ist in der Lageröffnung des Scharniergehäuseteils 2 montiert.

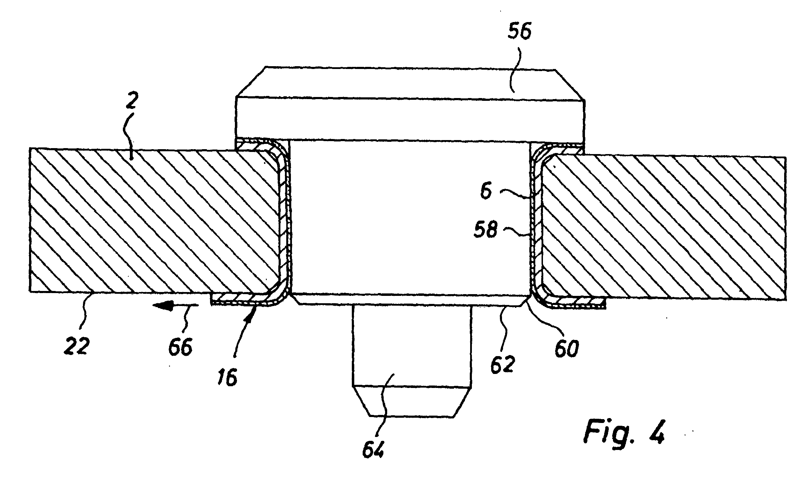

Nun kann, wie in Figur 4 dargestellt, ein Lagerbolzen 56 in die Bundlagerbuchse 6 eingesteckt werden. Der Lagerbolzen 56 umfasst eine zylindrische Außenfläche 58 mit einer in Einsteckrichtung vorderen Anfasung 60, die in eine Stirnfläche 62 übergeht. Von der Stirnfläche 62 steht ein Montageabschnitt 64 vor, der insbesondere drehfest mit einem weiteren Scharniergehäuseteil oder Gegenstand verbindbar ist. Figur 4 zeigt den eingesteckten Zustand des Lagerbolzens 56. Beim Einführen des Lagerbolzens 56 gleitet dieser mit seinem angefasten Bereich 60 über die sickenförmige Erhebung 50 auf und weitet den bogenförmigen Verlauf 52 nach radial außen. Die sickenförmige Erhebung 50, so wie sie in Figur 3 dargestellt ist, ist federnd elastisch nach radial außen verformbar. Hierbei gleitet der erste Bund 16 mit seiner gegen die Oberfläche 22 des Scharniergehäuseteils 2 anliegenden Stahlrückenseite gegen diese Oberfläche 22 nach radial außen (Pfeil 66 in Figur 4). Der bogenförmige Bereich 52 liegt dann wieder im wesentlichen spielfrei gegen die Wandung der Lageröffnung 4 des Scharniergehäuseteils 2 an. Durch die aus der Figur 4 nicht ersichtliche aber gleichwohl vorhandene nach radial innen gerichtete federnde Klemmkraft der vormaligen sickenförmigen Erhebung 50 wird der Lagerbolzen 56 klemmend und bei der üblichen Handhabung verliersicher in der Bundlagerbuchse 6 gehalten.

## Patentansprüche

1. Gleitlagerung umfassend ein eine Lageröffnung (4) aufweisendes Scharniergehäuseteil (2) und eine in die Lageröffnung (4) eingepresste Bundlagerbuchse (6), in die ein Lagerbolzen (26) einsteckbar und darin schwenkbar lagerbar ist, wobei die Bundlagerbuchse (6) eine in Umfangsrichtung verlaufende nach radial innen vorstehende sickenförmige Erhebung (50) aufweist, **dadurch gekennzeichnet,**
**dass** die sickenförmige Erhebung (50) von einem im Buchsenlängsschnitt betrachtet bogenförmig verlaufenden Bereich (52) der Wandung der Bundlagerbuchse (6) im Bereich eines axialen Endes der Lageröffnung (4) ausgebildet ist und der bogenförmige Bereich (52) in den dortigen Bund (16) der Buchse (6) ausläuft, derart, dass zwischen der Lageröffnung (4) und der dieser zugewandten Außenseite der Bundlagerbuchse (6) im Bereich des bogenförmigen Verlaufs vor dem Einstecken des Lagerbolzens (26) ein Abstand (h) gebildet ist und der bogenförmige Bereich (52) der Bundlagerbuchse (6) nach radial außen verformbar ist.

2. Gleitlagerung nach Anspuch 1, **dadurch gekennzeichnet, dass** die Bundlagerbuchse (6) eine Doppelbundbuchse ist.

3. Gleitlagerung nach Anspruch 1 oder 2, **dadurch gekennzeichnet, dass** ein Bund (16) der Bundlagerbuchse (6) gleitend gegen einen die Lageröffnung (4) umgebenden Oberflächenbereich (22) des Scharniergehäuseteils (2) oder eines zwischengeordneten Teils angeordnet ist, so dass der Bund (16) beim Einsetzen eines Lagerbolzens (26) in die Bundlagerbuchse (6) und damit einhergehender radialer Weitung der sickenförmigen Erhebung (50) nach radial außen gleitet.

4. Gleitlagerung nach einem oder mehreren der vorstehenden Ansprüche, **dadurch gekennzeichnet, dass** die sickenförmige Erhebung (50) über die radial innere Lageroberfläche um 0,01 - 0,1 mm vorsteht.

5. Gleitlagerung nach einem oder mehreren der vorstehenden Ansprüche, **dadurch gekennzeichnet, dass** ein radialer Überstand der sickenförmigen Erhebung (50) über die radial innere Lageroberfläche 0,01 - 0,15 - fache der Dicke der Wandstärke der Bundlagerbuchse beträgt.

6. Gleitlagerung nach einem oder mehreren der vorstehenden Ansprüche, **dadurch gekennzeichnet, dass** in die Bundlagerbuchse (6) ein Lagerbolzen (26) eingesetzt ist, der durch radiale Weitung der sickenförmigen Erhebung (50) klemmend und unverlierbar in der Bundlagerbuchse (6) gehalten ist.

7. Verfahren zum Herstellen einer Gleitlagerung nach einem oder mehreren der vorstehenden Ansprüche, die folgenden Merkmale umfassend:
- Formen der Bundlagerbuchse (6) unter Ausbildung eines Bunds (16),
- Anordnen der Bundlagerbuchse (6) in der Lageröffnung (4),
- Gegenhalten des Bunds (16) gegen die die Lageröffnung (4) umgebende Oberfläche (22) des Scharniergehäuseteils (2),
- Stauchen des zylindrischen Teils (14) der Bundlagerbuchse (6) von der gegenüberliegenden Seite her und Ausbilden eines nach radial innen vorstehenden bogenförmig verlaufenden Bereichs (52) der Buchsenwand.

8. Verfahren nach Anspruch 7, **dadurch gekennzeichnet, dass** während des axialen Stauchens ein Dorn (26) durch die Bundlagerbuchse (6) hindurchgeführt ist, der eine abgesetzte Außenfläche (28) aufweist, und dass im Übergang vom radial weiteren (30) zum radial engeren Bereich (32) der Außenfläche (28) des Dorns (26) der bogenförmig verlaufende Bereich (52) der Buchsenwand erzeugt wird.

9. Verfahren nach Anspruch 7 oder 8, **dadurch gekennzeichnet, dass** über den Dorn (26) zugleich die axiale Stauchung des zylindrischen Teils (14) der Bundlagerbuchse (6) durchgeführt wird.

10. Verfahren nach Anspruch 7, 8 oder 9, **dadurch gekennzeichnet, dass** beim axialen Stauchen zylindrischen Teils der Bundlagerbuchse ein zweiter Bund gebildet wird.

11. Verfahren nach Anspruch 7, 8, 9 oder 10, **dadurch gekennzeichnet, dass** der verwandte Dorn mit einer parallel zur herzustellenden Bundebene verlaufenden Preßfläche (46) versehen ist und dass die zylindrische Außenfläche (30) des Dorns (26) verrundet in diese Preßfläche (46) übergeht, so dass das Stirnende (42) des zylindrischen Bereichs (14) der Bundlagerbuchse (6) über diese Verrundung bis zu einem radial äußeren Anschlag (48) geleitet wird.

## Claims

1. Sliding bearing comprising a hinge housing component (2) having a bearing opening (4) and a flange-bearing bushing (6) pressed into the bearing opening (4), into which bushing a bearing pin (26) can be inserted and pivoted therein, the flange-bearing bushing (6) having a crimped projection (50) around the periphery projecting radially inwards, **characterised in that** the crimped projection (50) is formed by a curved region (52) of the flange-bearing bushing (6) wall in the region of one axial end of the bearing opening (4) when viewed in the longitudinal cross-section of the bushing, and the curved region (52) terminates in the flange (16) of the bushing (6), such that, prior to the insertion of the bearing pin (26), a spacing (h) is created between the bearing opening (4) and the outer side of the flange-bearing bushing (6) facing it in the region of the curved profile, and the curved region (52) of the flange-bearing bushing (6) can be deformed radially outwards.

2. Sliding bearing according to claim 1, **characterised in that** the flange-bearing bushing (6) is a double-flange bushing.

3. Sliding bearing according to either claim 1 or claim 2, **characterised in that** one flange (16) of the flange-bearing bushing (6) is located such that it slides against a surface region (22) of the hinge housing component (2) surrounding the bearing opening (4), so that the flange (16), when a bearing pin (26) is installed into the flange-bearing bushing (6) and with the accompanying radial expansion of the crimped projection (50), slides radially outwards.

4. Sliding bearing according to any one or more of the preceding claims, **characterised in that** the crimped projection (50) protrudes beyond the radial inner bearing surface by 0.01 to 0.1 mm.

5. Sliding bearing according to any one or more of the preceding claims, **characterised in that** a radial projection of the crimped projection (50) above the radial inner bearing surface amounts to 0.01 to 0.15 times the thickness of the wall thickness of the flanged-bearing bushing.

6. Sliding bearing according to any one or more of the preceding claims, **characterised in that** a bearing pin (26) is inserted into the flange-bearing bushing (6), which bearing pin (22) is held with pinch fit in the flange-bearing bushing (6) and is held captive as a result of the radial expansion of the crimped projection (50).

7. Method for producing a sliding bearing according to any one or more of the preceding claims, which comprises the following features:
- forming the flange-bearing bushing (6) by forming a flange (16) ,
- arranging the flange-bearing bushing (6) in the bearing opening (4),
- holding the flange (16) against the surface (22) of the hinge housing component (2) surrounding the bearing opening (4),
- compressing the cylindrical portion (14) of the flange-bearing bushing (6) from the opposing side and forming a curved region (52) of the flange wall projecting radially inwards.

8. Method according to claim 7, **characterised in that** during axial compression, a mandrel (26), having a stepped outer face (28), is guided through the flange-bearing bushing (6), and **in that** the curved region (52) of the flange wall is produced in the transition from the radially wider (30) to the radially narrower region (32) of the outer face (28) of the mandrel (26).

9. Method according to claim 7 or 8, **characterised in that** axial compression of the cylindrical portion (14) of the flange-bearing bushing (6) is simultaneously carried out via the mandrel (26).

10. Method according to claim 7, 8 or 9, **characterised in that** a second flange is formed on axial compression of the cylindrical portion of the flange-bearing bushing.

11. Method according to claim 7, 8, 9 or 10, **characterised in that** the mandrel used is provided with a pressing face (46) extending parallel to the flange plane to be produced, and **in that** the cylindrical outer face (30) of the mandrel (26) merges in a rounded manner into this pressing face (46), so the front end (42) of the cylindrical region (14) of the flange-bearing bushing (6) is guided via this rounded portion up to a radially outer stop (48).

## Revendications

1. Palier à glissement, comprenant une partie de boîtier articulé (2) présentant un orifice de palier (4) et un coussinet à collet (6), emmanché dans l'orifice de palier (4), dans lequel un tourillon (26) peut être introduit et supporté en rotation, le coussinet à collet (6) présentant un bossage (50) en forme de moulure qui s'étend dans le sens de la circonférence et dépasse radialement vers l'intérieur, **caractérisé en ce que** le bossage en forme de moulure (50), vu selon une coupe longitudinale du coussinet, est formé par une zone arquée (52) de la paroi du coussinet à collet (6), au niveau d'une extrémité axiale de l'orifice de palier (4), **en ce que** la zone arquée (52) se raccorde au collet (16) présent à cet endroit du coussinet (6) de façon à former entre l'orifice de palier (4) et le côté extérieur du coussinet à collet (6) qui lui fait face, avant l'introduction du tourillon (26), un espace (h) dans la zone en forme d'arc, et **en ce que** la zone arquée (52) du coussinet à collet (6) est déformable radialement vers l'extérieur.

2. Palier à glissement selon la revendication 1, **caractérisé en ce que** le coussinet à collet (6) est un coussinet à collet double.

3. Palier à glissement selon la revendication 1 ou la revendication 2, **caractérisé en ce qu'**un collet (16) du coussinet à collet (6) est disposé de façon à pouvoir glisser contre une zone superficielle (22) entourant l'orifice de palier (4) de la partie de boîtier articulé (2) ou d'une pièce intermédiaire de façon que le collet (16) glisse radialement vers l'extérieur lors de la mise en place d'un tourillon (26) dans le coussinet à collet (6) et le creux radial correspondant du bossage en forme d'arc (50).

4. Palier à glissement selon l'une ou plusieurs des revendications précédentes, **caractérisé en ce que** le bossage en forme d'arc (50) dépasse de 0,01 à 0,1 mm au-dessus de la surface radialement interne du palier.

5. Palier à glissement selon l'une ou plusieurs des revendications précédentes, **caractérisé en ce qu'**un dépassement radial du bossage en forme d'arc (50) au-dessus de la surface radialement interne du palier est égal à 0,01 à 0,15 fois l'épaisseur de la paroi du coussinet à collet.

6. Palier à glissement selon l'une ou plusieurs des revendications précédentes, **caractérisé en ce qu'**un tourillon (26) est introduit dans le coussinet à collet (6), lequel tourillon est maintenu de manière serrée et imperdable dans le coussinet à collet (6) par le creux radial du bossage en forme d'arc (50).

7. Procédé de fabrication d'un palier à glissement selon l'une ou plusieurs des revendications précédentes, comprenant les caractéristiques suivantes :
- formage du coussinet à collet (6) avec réalisation d'un collet (16),
- mise en place du coussinet à collet (6) dans l'orifice de palier (4),
- maintien du collet (16) contre la surface (22) de la partie de boîtier articulé (2) entourant l'orifice de palier (4),
- refoulement de la partie cylindrique (14) du coussinet à collet (6) à partir de la face opposée et formage dans la paroi du coussinet d'une zone en forme d'arc (52) dépassant radialement vers l'intérieur.

8. Procédé selon la revendication 7, **caractérisé en ce que**, pendant le refoulement axial, une broche (26) présentant une surface extérieure épaulée (28) est passée dans le coussinet à collet (6) et **en ce que** la zone en forme d'arc (52) de la paroi du coussinet est réalisée dans la transition de la zone radialement plus large (30) à la zone radialement plus étroite (32) de la surface extérieure (28) de la broche (26).

9. Procédé selon la revendication 7 ou la revendication 8, **caractérisé en ce que** la broche (26) effectue en même temps le refoulement axial de la partie cylindrique (14) du coussinet à collet (6).

10. Procédé selon la revendication 7, 8 ou 9, **caractérisé en ce qu'**un deuxième collet est formé lors du refoulement axial de la partie cylindrique du coussinet à collet.

11. Procédé selon la revendication 7, 8, 9 ou 10, **caractérisé en ce que** la broche utilisée est munie d'une surface de compression (46) s'étendant parallèlement au plan du collet à réaliser et **en ce que** la surface extérieure cylindrique (30) de la broche (26) se raccorde en arrondi à cette surface de compression (46) de façon que l'extrémité avant (42) de la zone cylindrique (14) du coussinet à collet (6) soit amenée par cet arrondi jusqu'à une butée radialement extérieure (48).
